# EUROPEAN PATENT APPLICATION

(11) **EP 3 264 853 A1**
(43) Date of publication of application: **03.01.2018**
(21) Application number: 17171074.2
(22) Date of filing: 15.05.2017
(51) Int. Cl.: H04W 76/02

(54) **RRC CONNECTION ESTABLISHING METHOD AND APPARATUS, COMPUTER PROGRAM AND RECORDING MEDIUM**

(30) Priority: 30.06.2016 WO PCT/CN2016/087907
(71) Applicant: Beijing Xiaomi Mobile Software Co., Ltd., Beijing 100085 (CN)
(72) Inventor: HONG, Wei, Beijing, Beijing 100085 (CN); WANG, Li, Beijing, Beijing 100085 (CN); ZHANG, Ming, Beijing, Beijing 100085 (CN)
(74) Representative: dompatent von Kreisler Selting Werner - Partnerschaft von Patent- und Rechtsanwälten mbB

(57) **Abstract**

The present invention discloses an RRC connection establishing method and apparatus, a computer program and a recording medium, which pertain to the technical field of communications. The method comprises: receiving a designated signaling sent by a first base station, the designated signaling carrying system configuration information of a second base station; and establishing an RRC connection with the second base station, based on the system configuration information of the second base station. With technical solutions of embodiments of the disclosure, a UE can be prevented from simultaneously receiving RRC signaling from both LTE and 5G NR, thereby reducing the complexity of the UE; and LTE and 5G NR networks can be effectively aggregated on control plane, thereby improving control plane aggregation performance of these two networks.

## Description

### TECHNICAL FIELD

The present disclosure is related to the technical field of communications, and more particularly to a Radio Resource Control (RRC) connection establishing method and apparatus, a computer program and a recording medium.

### BACKGROUND

With the development of communication technology, mobile communications have made a great leap forward from voice services to mobile broadband data services, which not only greatly changes people's life style but also significantly promotes the development of society and economy. As two major driving forces for the future development of mobile communications, mobile Internet and Internet of Things enable a wide range of applications of the Fifth Generation (5G) technology. Towards 2020 and beyond, data traffic will increase by several thousand times, and connections between hundred billions of devices and diverse service requirements will pose serious challenges to the 5G system design. The 5G technology will satisfy people's very high requirements for traffic density, number of connections and mobility, and can provide users with extreme service experiences such as high fidelity video, virtual reality, augmented reality, cloud desktop and online games. The 5G technology will penetrate into fields such as Internet of Things to be deeply integrated with industrial facilities, medical devices, vehicles and the like, so as to completely realize "Internet of Everything" and effectively satisfy requirements for information services in vertical industries such as industry, medical treatment and transportation. Further, the 5G technology will significantly improve energy and cost efficiency of network construction and operation, promote service innovation capability comprehensively, and enlarge the scope of the mobile communications industry.

### SUMMARY

To address the problem in the related art, the present disclosure provides an RRC connection establishing method and apparatus, a computer program and a recording medium.

According to a first aspect, there is provided an RRC connection establishing method, comprising: receiving a designated signaling sent by a first base station, the designated signaling carrying system configuration information of a second base station; and establishing an RRC connection with the second base station, based on the system configuration information of the second base station.

In a possible embodiment, the system configuration information of the second base station is sent to the first base station by the second base station through a designated interface.

In a possible embodiment, the designated signaling is an RRC connection reconfiguration signaling.

In a possible embodiment, the designated signaling is a broadcast message or a unicast message.

In a possible embodiment, the system configuration information at least includes synchronization information and system bandwidth information.

In a possible embodiment, the first base station is a Long Term Evolution (LTE) base station, and the second base station is a Fifth Generation (5G) base station; or the first base station is a 5G base station, and the second base station is an LTE base station.

According to a second aspect, there is provided an RRC connection establishing method, implemented in a first base station and comprising: generating a designated signaling from system configuration information of a second base station, the designated signaling carrying the system configuration information of the second bases station; and sending the designated signaling to a User Equipment (UE), so that the UE establishes an RRC connection based on the system configuration information of the second base station.

In a possible embodiment, before the designated signaling is generated from the system configuration information of the second base station, the method further comprises: receiving the system configuration information sent by the second base station, through a designated interface with the second base station.

In a possible embodiment, when it is detected that the UE experiences a switch of service and if the second base station satisfies requirements for the service switch, the designated signaling is generated from the system configuration information of the second base station.

In a possible embodiment, the designated signaling is an RRC connection reconfiguration signaling.

In a possible embodiment, the designated signaling is a broadcast message or a unicast message.

In a possible embodiment, the system configuration information at least includes synchronization information and system bandwidth information.

In a possible embodiment, the first base station is an LTE base station, and the second base station is a 5G base station; or the first base station is a 5G base station, and the second base station is an LTE base station.

According to a third aspect, there is provided a user equipment, comprising: a receiving module configured to receive a designated signaling sent by a first base station, the designated signaling carrying system configuration information of a second base station; and a connection establishing module configured to establish an RRC connection with the second base station, based on the system configuration information of the second base station.

In a possible embodiment, the system configuration information of the second base station is sent to the first base station by the second base station through a designated interface.

In a possible embodiment, the designated signaling is an RRC connection reconfiguration signaling.

In a possible embodiment, the designated signaling is a broadcast message or a unicast message.

In a possible embodiment, the system configuration information at least includes synchronization information and system bandwidth information.

In a possible embodiment, the first base station is an LTE base station, and the second base station is a 5G base station; or the first base station is a 5G base station, and the second base station is an LTE base station.

According to a fourth aspect, there is provided a base station, comprising: a generating module configured to generate a designated signaling from system configuration information of a second base station, the designated signaling carrying the system configuration information of the second bases station; and a sending module configured to send the designated signaling to a UE, so that the UE establishes an RRC connection based on the system configuration information of the second base station.

In a possible embodiment, the base station further comprises: a receiving module configured to receive the system configuration information sent by the second base station, through a designated interface with the second base station.

In a possible embodiment, the generating module is configured to: when it is detected that the UE experiences a switch of service and if the second base station satisfies requirements for the service switch, generate the designated signaling from the system configuration information of the second base station.

In a possible embodiment, the designated signaling is an RRC connection reconfiguration signaling.

In a possible embodiment, the designated signaling is a broadcast message or a unicast message.

In a possible embodiment, the system configuration information at least includes synchronization information and system bandwidth information.

In a possible embodiment, the base station is an LTE base station, and the second base station is a 5G base station; or the base station is a 5G base station, and the second base station is an LTE base station.

According to a fifth aspect, there is provided a control plane aggregation network architecture, comprising a first base station and a second base station. The first base station is configured to: generate a designated signaling from system configuration information of the second base station, the designated signaling carrying the system configuration information of the second bases station; and send the designated signaling to a UE. The second base station is configured to: receive the designated signaling sent by the first base station, the designated signaling carrying the system configuration information of the second base station; and have an RRC connection established therewith based on the system configuration information of the second base station.

In a possible embodiment, the second base station is further configured to send the system configuration information to the first base station through a designated interface with the first base station, and the first base station is further configured to receive the system configuration information sent by the second base station through the designated interface with the second base station.

In a possible embodiment, the designated signaling is an RRC connection reconfiguration signaling.

In a possible embodiment, the designated signaling is a broadcast message or a unicast message.

In a possible embodiment, the system configuration information at least includes synchronization information and system bandwidth information.

In a possible embodiment, the first base station is an LTE base station, and the second base station is a 5G base station; or the first base station is a 5G base station, and the second base station is an LTE base station.

In one particular embodiment, the steps of the RRC connection establishing method are determined by computer program instructions.

Consequently, according to a sixth aspect, the invention is also directed to a computer program for executing the steps of the RRC connection establishing method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions according to the embodiments of this disclosure may have the following advantageous effects. By interaction of system configuration information between base stations, the technical solutions according to the embodiments of the disclosure enable system configuration information of a base station to be carried by a designated signaling sent by another base station. As such, a UE can be prevented from simultaneously receiving RRC signaling from both LTE and 5G New Radio (NR), thereby reducing the complexity of the UE; and LTE and 5G NR networks can be effectively aggregated on control plane, thereby improving control plane aggregation performance of these two networks.

It should be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is an architectural diagram of a communication system according to an exemplary embodiment;
Fig. 2 is a flowchart of an RRC connection establishing method according to an exemplary embodiment;
Fig. 3 is a schematic diagram of a control plane aggregation network architecture according to an exemplary embodiment;
Fig. 4 is a schematic diagram of a control plane aggregation network architecture according to an exemplary embodiment;
Fig. 5 is a block diagram of a user equipment according to an exemplary embodiment;
Fig. 6 is a block diagram of a base station according to an exemplary embodiment;
Fig. 7 is a block diagram of a user equipment 700 according to an exemplary embodiment;
Fig. 8 is a block diagram of a base station according to an exemplary embodiment.

### DETAILED DESCRIPTION

In order to make objects, solutions and advantages of the disclosure more apparent, embodiments of the disclosure will be described below in detail in conjunction with the accompanying drawings.

Reference will now be made in detail to embodiments, examples of which are illustrated in the accompanying drawings. The following description refers to the accompanying drawings in which the same numbers in different drawings represent the same or similar elements unless otherwise indicated. The implementations set forth in the following description of embodiments do not represent all implementations consistent with the disclosure. Instead, they are merely examples of apparatuses and methods consistent with aspects related to the disclosure as recited in the appended claims.

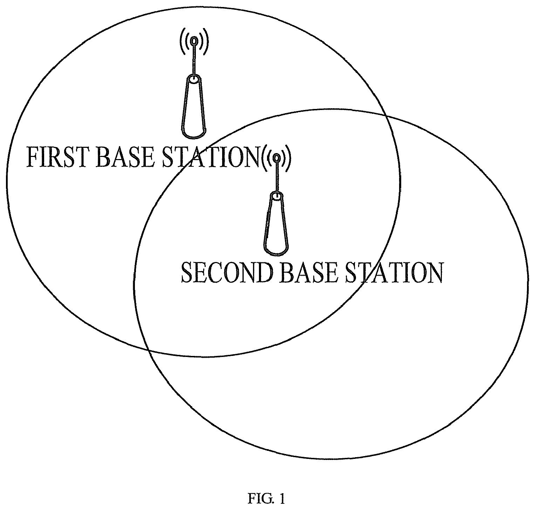

Fig. 1 is an architectural diagram of a communication system according to an exemplary embodiment. As shown, the communication system may include a first base station and a second base station. Between the first base station and the second base station, a designated interface may be provided for information interaction therebetween. The first base station and the second base station may utilize different communication protocols. For example, the first base station utilizes an LTE protocol and is a base station in an LTE system, while the second base station utilizes a 5G protocol and is a base station in a 5G system. Additionally, the first base station and the second base station may have overlapped coverage areas, which is not limited in the embodiment of the disclosure. Of course, the first base station may be a 5G base station while the second base station may be an LTE base station, which is not limited in the embodiment of the disclosure.

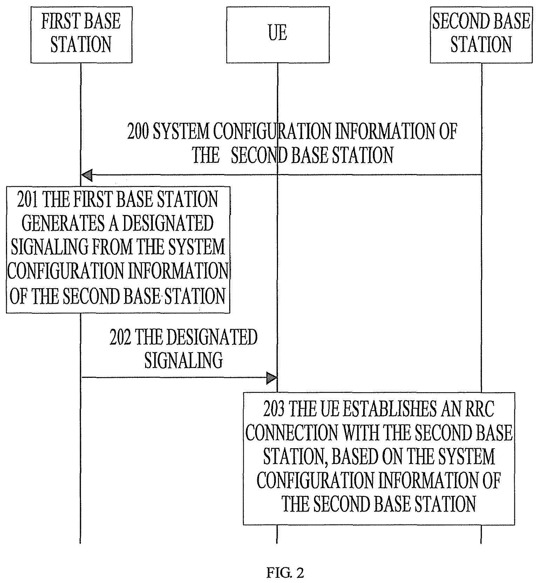

Fig. 2 is a flowchart of an RRC connection establishing method according to an exemplary embodiment. As shown, the RRC connection establishing method, which is described by merely taking an example where a UE is currently located in a coverage area of a first base station, comprises the following steps.

At step 201, the first base station generates a designated signaling based on system configuration information of a second base station, the designated signaling carrying the system configuration information of the second base station.

The system configuration information of the second base station is sent to the first base station by the second base station through a designated interface. The designated interface may be an Xn interface, which is an interface for performing communications between base stations.

Correspondingly, the embodiment of the disclosure further comprises a step 200, at which the second base station sends the system configuration information of the second base station to the first base station through the designated interface with the first base station and the first base station receives the system configuration information. The system configuration information refers to information required for RRC connection establishment, and at least includes synchronization information and system bandwidth information. Of course, the system configuration information may also comprise other information, which is not limited in the embodiment of the disclosure.

In a possible implementation, the designated signaling is an RRC connection reconfiguration signaling, which is typically used for establishing and reconfiguring a Signaling Radio Bearer 2 (SRB2) and a Data Radio Bearer (DRB). Of course, instead of being the RRC connection configuration signaling, the designated signaling may also be a signaling dedicated for transferring the system configuration information, which is not limited in the embodiment of the disclosure.

In an embodiment of the disclosure, when it is detected that the UE experiences a switch of service and if the second base station satisfies requirements for the service switch, the step of generating the designated signaling from the system configuration information of the second base station is performed. The switch of service refers to a change of the UE's service. For example, the UE's data service changes from webpage browsing to video playing. In that case, the first base station perhaps cannot satisfy requirements for the service switch. If there is a second base station which satisfies the requirements for the service switch within the coverage area of the first base station, the first base station may carry the system configuration information of the second base station in the designated signaling and send the signaling to the UE, so that the UE can establish an RRC connection with the second base station and perform via the second base station the service after the switch.

It should be noted that the first base station may determine whether it is needed to switch to the second base station based on the UE's service request. The determination may be specifically performed based on the type of the service request or the like, which is not limited in the embodiment of the disclosure.

At step 202, the first base station sends the designated signaling to the UE.

In a possible implementation, the designated signaling is a broadcast message or a unicast message, which is not limited in the embodiment. The designated message may be a unicast message sent to only a certain UE for informing the UE of how to perform RRC connection establishment with the second base station, or the designated signaling may be a broadcast message sent to multiple UEs for informing each UE of information required for performing RRC connection establishment with the second base station, so that the UE can acquire the system configuration information locally when it needs to perform RRC connection establishment with the second base station.

At step 203, when receiving the designated signaling sent by the first base station, the UE establishes an RRC connection with the second base station based on the system configuration information of the second base station.

When receiving the designated signaling sent by the first base station and determining to perform base station switching, the UE establishes an RRC connection with the second base station based on the system configuration information of the second base station. The process for establishing an RRC connection with the second base station is similar to the process for establishing an RRC connection with the first base station, and will not be described here redundantly.

The embodiment of the disclosure may be specifically implemented based on a novel LTE-NR control plane aggregation network architecture. This novel control plane aggregation network architecture includes the above-described first base station and second base station. The first base station is an LTE base station and the second base station is a 5G base station; or the first base station is a 5G base station and the second base station is an LTE base station.

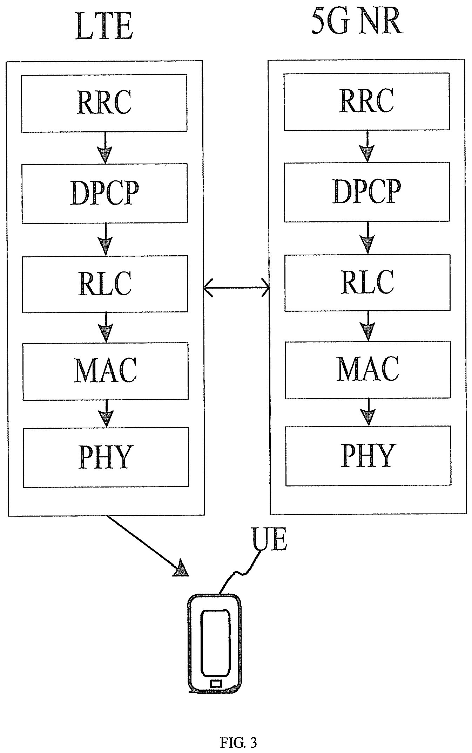

For example, the first base station is an LTE base station, and the second base station is a 5G base station. Referring to Fig. 3, in LTE, the control plane consists of an RRC layer, a Packet Data Convergence Protocol (PDCP) layer, a Radio Link Control (RLC) layer, a Media Access Control (MAC) layer and a Physical (PHY) layer. If Dual Connectivity (DC) or the like is used as the basis of the LTE-NR control plane aggregation network architecture and LTE serves as the anchor, system configuration information of 5G NR may be transmitted to the LTE through a newly defined Xn interface and sent to a UE by the RRC layer of the LTE, and no RRC signaling is generated by the 5G NR.

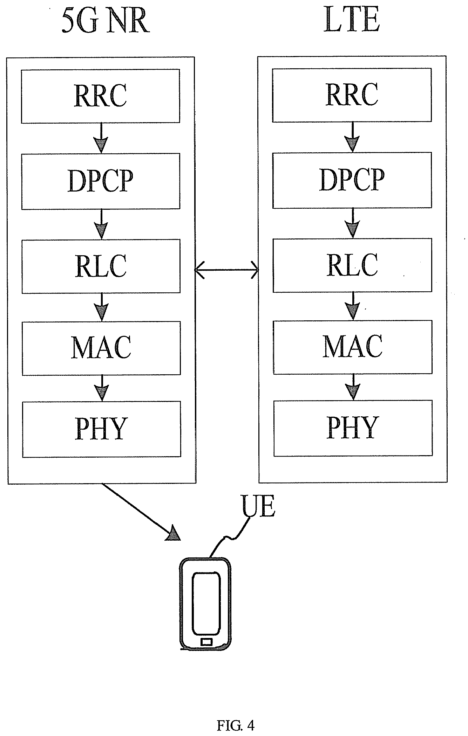

For example, the first base station is a 5G base station, and the second base station is an LTE base station. Referring to Fig. 4, if Dual Connectivity (DC) or the like is used as the basis of the LTE-NR control plane aggregation network architecture and NR serves as the anchor, system configuration information of LTE may be transmitted to the NR through a newly defined Xn interface and sent to a UE by the RRC layer of the NR, and no RRC signaling is generated by the LTE.

With the method according to the embodiment of the disclosure, a UE can be prevented from simultaneously receiving RRC signaling from both LTE and 5G NR, thereby reducing the complexity of the UE; and LTE and 5G NR networks can be effectively aggregated on control plane, thereby improving control plane aggregation performance of these two networks.

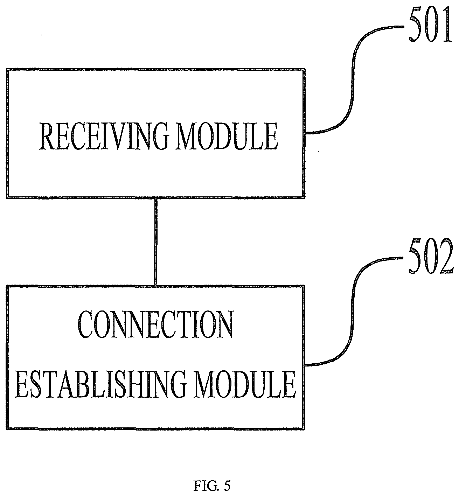

Fig. 5 is a block diagram of a user equipment according to an exemplary embodiment. As shown, the user equipment comprises the following modules 501 and 502.

The receiving module 501 is configured to receive a designated signaling sent by a first base station, the designated signaling carrying system configuration information of a second base station.

The connection establishing module 502 is configured to establish an RRC connection with the second base station, based on the system configuration information of the second base station.

In a possible embodiment, the system configuration information of the second base station is sent to the first base station by the second base station through a designated interface.

In a possible embodiment, the designated signaling is an RRC connection reconfiguration signaling.

In a possible embodiment, the designated signaling is a broadcast message or a unicast message.

In a possible embodiment, the system configuration information at least includes synchronization information and system bandwidth information.

In a possible embodiment, the first base station is an LTE base station, and the second base station is a 5G base station; or the first base station is a 5G base station, and the second base station is an LTE base station.

Regarding the user equipment in the above embodiments, the specific manners for the individual modules to perform operations have been described in detail in the embodiments of the related methods and will not be elaborated herein.

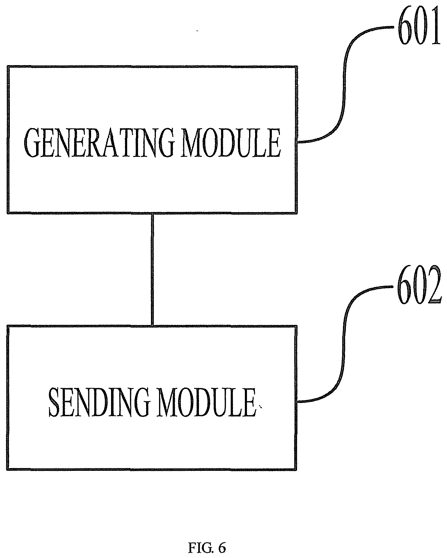

Fig. 6 is a block diagram of a base station according to an exemplary embodiment. As shown, the base station comprises the following modules 601 and 602.

The generating module 601 is configured to generate a designated signaling from system configuration information of a second base station, the designated signaling carrying the system configuration information of the second bases station.

The sending module 602 is configured to send the designated signaling to a UE, so that the UE establishes an RRC connection based on the system configuration information of the second base station.

In a possible embodiment, the base station further comprises: a receiving module configured to receive the system configuration information sent by the second base station, through a designated interface with the second base station.

In a possible embodiment, the generating module is configured to: when it is detected that the UE experiences a switch of service and if the second base station satisfies requirements for the service switch, generate the designated signaling from the system configuration information of the second base station.

In a possible embodiment, the designated signaling is an RRC connection reconfiguration signaling.

In a possible embodiment, the designated signaling is a broadcast message or a unicast message.

In a possible embodiment, the system configuration information at least includes synchronization information and system bandwidth information.

In a possible embodiment, the base station is an LTE base station, and the second base station is a 5G base station; or the base station is a 5G base station, and the second base station is an LTE base station.

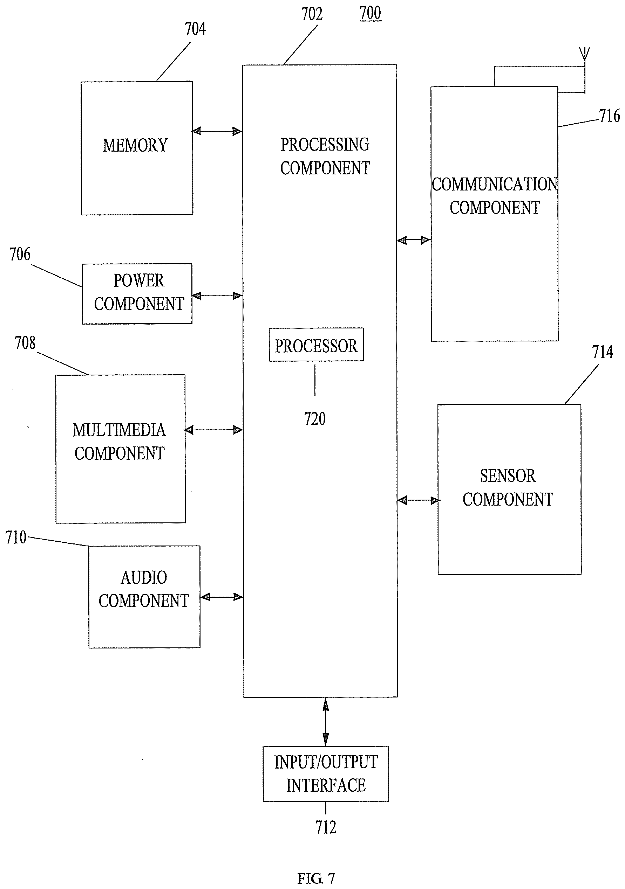

Fig. 7 illustrates a schematic diagram of a user equipment 700 according to an exemplary embodiment. For example, the user equipment 700 may be a mobile phone, a computer, a digital broadcast terminal, a messaging device, a gaming console, a tablet device, a medical device, exercise equipment, a personal digital assistant or the like.

Referring to Fig. 7, the user equipment 700 may comprise one or more of the following components: a processing component 702, a memory 704, a power component 706, a multimedia component 708, an audio component 710, an input/output (I/O) interface 712, a sensor component 714 and a communication component 716.

The processing component 702 typically controls overall operations of the user equipment 700, such as the operations associated with display, telephone calls, data communications, camera operations and recording operations. The processing component 702 may include one or more processors 720 to execute instructions to perform all or some of the steps in the above described methods. Moreover, the processing component 702 may include one or more modules which facilitate the interaction between the processing component 702 and other components. For example, the processing component 702 may comprise a multimedia module to facilitate the interaction between the multimedia component 708 and the processing component 702.

The memory 704 is configured to store various types of data to support the operation of the user equipment 700. Examples of such data comprise instructions for any applications or methods operated on the user equipment 700, contact data, phonebook data, messages, pictures, videos, etc. The memory 704 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the user equipment 700. The power component 706 may comprise a power management system, one or more power sources, and any other components associated with the generation, management, and distribution of power in the user equipment 700.

The multimedia component 708 comprises a screen providing an output interface between the user equipment 700 and the user. In some embodiments, the screen may comprise a liquid crystal display (LCD) and a touch panel (TP). If the screen comprises the touch panel, the screen may be implemented as a touch screen to receive input signals from the user. The touch panel comprises one or more touch sensors to sense touches, swipes and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum while the user equipment 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone (MIC) configured to receive an external audio signal when the user equipment 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 comprises one or more sensors to provide status assessments of various aspects of the user equipment 700. For instance, the sensor component 714 may detect an open/closed status of the user equipment 700, relative positioning of components, e.g., the display and the keypad, of the user equipment 700, a change in position of the user equipment 700 or a component of the user equipment 700, presence or absence of user's contact with the user equipment 700, an orientation or an acceleration/deceleration of the user equipment 700, and a change in temperature of the user equipment 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor or a temperature sensor.

The communication component 716 is configured to facilitate communication, wired or wirelessly, between the user equipment 700 and other devices. The user equipment 700 can access a wireless network based on a communication standard, such as WiFi, 2G, or 3G, or a combination thereof. In one embodiment, the communication component 716 receives a broadcast signal or broadcast associated information from an external broadcast management system via a broadcast channel. In one embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an embodiment, the user equipment 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

In an embodiment, there is also provided a non-transitory computer-readable storage medium comprising instructions, such as comprised in the memory 704, executable by the processor 720 in the user equipment 700, for performing the above-described methods. For example, the non-transitory computer-readable storage medium may be a ROM, a RAM, a CD-ROM, a magnetic tape, a floppy disc, an optical data storage device or the like.

The non-transitory computer-readable storage medium has stored therein instructions that, when executed by a processor of the user equipment 700, cause the user equipment 700 to perform one of the above RRC connection establishing methods.

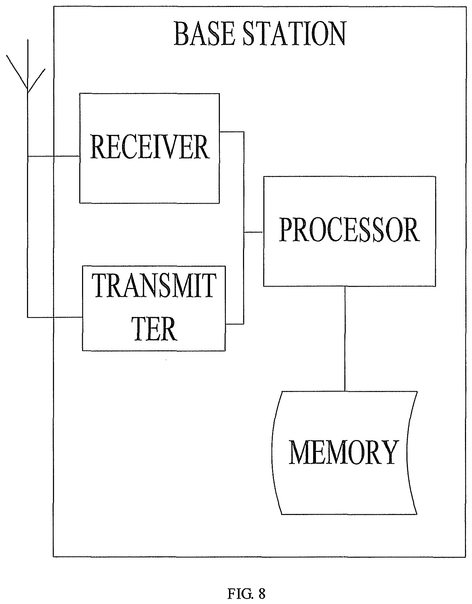

Fig. 8 is a schematic structural diagram of a base station according to an exemplary embodiment. As shown, the base station includes a transmitter, a receiver, a memory and a processor connected with the transmitter, the receiver and the memory. Of course, the base station may also include common components, such as an antenna, a baseband processing component, an intermediate frequency and radio frequency processing component, which is not limited in the embodiment of the invention.

The base station is configured to perform an RRC connection establishing method at base station side according to the embodiment shown in Fig. 2. The transmitter and the receiver may be implemented as a transceiver. The processor may be a Central Processing Unit (CPU), a microprocessor, a single chip machine or the like.

Other embodiments of the disclosure will be apparent to those skilled in the art from consideration of the specification and practice of the invention disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. An RRC connection establishing method, implemented in a first base station and comprising:
generating (201) a designated signaling from system configuration information of a second base station, the designated signaling carrying the system configuration information of the second bases station; and
sending (202) the designated signaling to a User Equipment, UE, so that the UE establishes (203) an RRC connection based on the system configuration information of the second base station.

2. The method of claim 1, wherein, before the designated signaling is generated from the system configuration information of the second base station, the method further comprises: receiving the system configuration information sent by the second base station, through a designated interface with the second base station.

3. The method of claim 1, wherein
when it is detected that the UE experiences a switch of service and if the second base station satisfies requirements for the service switch, the designated signaling is generated from the system configuration information of the second base station.

4. The method of claim 1, wherein the designated signaling is an RRC connection reconfiguration signaling.

5. The method of claim 1, wherein the designated signaling is a broadcast message or a unicast message.

6. The method of claim 1, wherein the system configuration information at least includes synchronization information and system bandwidth information.

7. The method of any of claims 1 to 6, wherein
the first base station is an LTE base station, and the second base station is a 5G base station; or
the first base station is a 5G base station, and the second base station is an LTE base station.

8. Abase station, comprising:
a generating module (601) configured to generate a designated signaling from system configuration information of a second base station, the designated signaling carrying the system configuration information of the second bases station; and
a sending module (602) configured to send the designated signaling to a UE, so that the UE establishes an RRC connection based on the system configuration information of the second base station.

9. The base station of claim 8, further comprising:
a receiving module configured to receive the system configuration information sent by the second base station, through a designated interface with the second base station.

10. The base station of claim 8, wherein the generating module is configured to:
when it is detected that the UE experiences a switch of service and if the second base station satisfies requirements for the service switch, generate the designated signaling from the system configuration information of the second base station.

11. The base station of claim 8, wherein the designated signaling is an RRC connection reconfiguration signaling.

12. The base station of claim 8, wherein the designated signaling is a broadcast message or a unicast message.

13. A control plane aggregation network architecture, comprising a first base station and a second base station, wherein
the first base station is configured to: generate a designated signaling from system configuration information of the second base station, the designated signaling carrying the system configuration information of the second bases station; and send the designated signaling to a UE, and
the second base station is configured to: receive the designated signaling sent by the first base station, the designated signaling carrying the system configuration information of the second base station; and have an RRC connection established therewith based on the system configuration information of the second base station.

14. A computer program including instructions for executing the steps of an RRC connection establishing method according to any of claims 1-7 when said program is executed by a computer.

15. A recording medium readable by a computer and having recorded thereon a computer program including instructions for executing the steps of an RRC connection establishing method according to any of claims 1-7.
